# EUROPEAN PATENT SPECIFICATION

(11) **EP 3 227 858 B1**
(45) Date of publication and mention of the grant of the patent: **29.08.2018**
(21) Application number: 15804789.4
(22) Date of filing: 04.12.2015
(51) Int. Cl.: G06T 7/11, G06T 7/215

(54) **A METHOD AND APPARATUS FOR ASSISTED OBJECT SELECTION IN VIDEO SEQUENCES**
VERFAHREN UND VORRICHTUNG FÜR UNTERSTÜTZTE OBJEKTAUSWAHL IN VIDEOSEQUENZEN
PROCÉDÉ ET APPAREIL DE SÉLECTION D'OBJETS ASSISTÉE DANS DES SÉQUENCES VIDÉO

(30) Priority: 04.12.2014 EP 14306952
(43) Date of publication of application: 11.10.2017
(73) Proprietor: Thomson Licensing, 92130 Issy-les-Moulineaux (FR)
(72) Inventor: CRIVELLI, Tomas Enrique, 35576 Cesson-Sevigne (FR); URBAN, Fabrice, 35576 Cesson-Sevigne (FR); OISEL, Lionel, 35576 Cesson-Sevigne (FR)
(74) Representative: Huchet, Anne
(86) International application number: PCT/EP2015/078639
(87) International publication number: WO 2016/087633

(56) References cited:
- US-A1- 2014 003 713
- US-B1- 6 785 329
- WOO-HAN YUN ET AL: "Visual object tracking for handheld devices", INDUSTRIAL ELECTRONICS (ISIE), 2013 IEEE INTERNATIONAL SYMPOSIUM ON, IEEE, 28 May 2013 (2013-05-28), pages 1-5, XP032439499, ISSN: 2163-5137, DOI: 10.1109/ISIE.2013.6563823 ISBN: 978-1-4673-5194-2

## Description

### BACKGROUND

The present disclosure generally relates to the field of image analysis and object/region selection.

Many problems in computer vision and image processing require a preprocessing step where objects of interests are segmented or located. For example, consider the problem of tracking an object of interest (object tracking), which requires locating the position of the object at every instant. The initial position of the object (target) can be manually defined in the first frame or as the output of an object detector in the case of dedicated trackers. Almost exclusively it is determined by a bounding box containing the object of interest. However, there are meaningful cases where the type of content, the user and the device require a more principled solution. Such as, e.g., when the user is not an expert and thus cannot provide a good selection of the object of interest from the point of view of the tracking algorithm; or the content is general and thus it is barely impossible to apply a dedicated object detector; or the device has a limited interface which requires a rapid, simple and intuitive input from the user.

A paper by Woo-han Yun et al., "Visual object tracking for handheld devices", 2013 IEEE International Symposium on Industrial Electronics ISIE, IEEE, 28 May 2013, pp. 1 - 5, DOI: 10.1109/ISIE.2013.6563823 discloses object tracking on handheld devices with drag-and-drop selection, mean-shift tracking and colour-based histogram backprojection.

US 2014/003713 A1 concerns foreground-background segmentation of a video using foreground and background models. Pixels correlated with the background according to a threshold are removed from the foreground. A general tracker is used and a GUI is provided.

US6785329 B1 teaches colour- and motion-based foreground/background segmentation of a video with automatic seed-setting.

### SUMMARY

The invention is defined in independent method claim 1 and apparatus claim 4. We propose a new approach for determining a bounding box containing an object of interest, which is then tracked along a video sequence. In particular, and in accordance with the principles of the present disclosure, at least a single point on an object of interest will initiate joint motion and color processing to determine the bounding box containing the object of interest.

According to the present principles, a method for determining a bounding box for display on a device, the bounding box containing an object in a video sequence, comprises selecting at least one point that belongs to the object; motion processing an area of points around the selected at least one point to determine an estimated bounding box; and color processing the points in the estimated bounding box to determine the bounding box.

The present principles also relate to a method for determining a bounding box for display on a device, the bounding box containing an object in a video sequence, the method comprising selecting at least one point that belongs to the object; and joint motion and color processing the at least one point to determine the bounding box comprising the object.

According to an embodiment, the selecting is performed by a user.

According to an embodiment, the motion processing uses motion flood-filling on a Delaunay triangulation.

According to an embodiment, for each side of the estimated bounding box, the color processing further comprises adding a new line of pixels; for each new pixel, measuring its distance to a foreground model and a background model; computing a score for each new pixel, wherein the score is equal to a difference of the distance to the background model minus the distance to the foreground model; averaging the scores for the new line of pixels; wherein if the average score for the new line of pixels is greater than a threshold, the new line of pixels is added to the estimated bounding box; wherein the bounding box is formed when no new line of pixels is added.

According to an embodiment, the joint processing further comprises motion processing an area of points around the selected at least one point to determine an estimated bounding box; and color processing the points in the estimated bounding box to determine the bounding box.

The present principles also relate to an apparatus comprising means for displaying a video sequence and for allowing a selection of at least one point on an object of interest in the displayed video sequence; means for storing a motion processing program and a color processing program; and means for processing the selected at least one point with the stored motion processing program and the stored color processing program for determining a bounding box for display on the touch screen display.

According to an embodiment, said means for displaying correspond to a display; said means for allowing a selection correspond to an input device; said means for processing correspond to one or several processors.

According to an embodiment, the input device is as least one of a mouse or keyboard.

According to an embodiment, the stored motion processing program includes instructions for motion flood-filling on a Delaunay triangulation to determine an estimated bounding box.

According to an embodiment, the stored color processing program includes instructions for adding a new line of pixels to the estimated bounding box; wherein for each new pixel, distance to a foreground model and a background model is measured; and wherein a score is computed for each new pixel, wherein the score is equal to a difference of the distance to the background model minus the distance to the foreground model; and wherein the scores for the new line of pixels are averaged; wherein if the average score for the new line of pixels is greater than a threshold, the new line of pixels is added to the estimated bounding box; and wherein the bounding box is formed when no new line of pixels is added.

In another illustrative embodiment the device is a mobile device such as a mobile phone, tablet, digital still camera, etc.

In view of the above, and as will be apparent from reading the detailed description, other embodiments and features are also possible and fall within the principles of the invention.

### BRIEF DESCRIPTION OF THE DRAWINGS

FIG. 1 shows an illustrative flow chart for providing a bounding box in accordance with the principles of the invention;
FIG. 2 illustrates selection of a point on an object of interest;
FIG. 3 illustrates selection of a trace on an object of interest;
FIG. 4 shows an illustrative flow chart for motion processing in accordance with the principles of the invention;
FIG. 5 illustrates Delaunay triangulation on the object of interest;
FIG. 6 illustrates the final list of points considered part of the object of interest based on motion similarity;
FIG. 7 illustrates a bounding box based only on motion information;
FIG. 8 shows an illustrative flow chart for color processing in accordance with the principles of the invention;
FIG. 9 illustrates the final bounding box containing the object of interest for display on the device;
FIG. 10, illustrates the ability to have multiple bounding boxes for different objects of interest; and
FIG. 11 shows an illustrative device for use in executing the flow chart of FIG. 1.

### DETAILED DESCRIPTION

Other than the inventive concept, the elements shown in the figures are well known and will not be described in detail. For example, other than the inventive concept, a device that is processor-based is well known and not described in detail herein. Some examples of processor-based devices are a mobile phone, table, digital still camera, laptop computer, desk top computer, digital television, etc. Further, other than the inventive concept, familiarity with video object processing such as Delaunay triangulation processing and flood filling (region growing) is assumed and not described herein. It should also be noted that the inventive concept may be implemented using conventional programming techniques, e.g., APIs (application programming interfaces) which, as such, will not be described herein. Finally, like-numbers on the figures represent similar elements. It should also be noted that although color processing is referred to below, the figures are in black and white, i.e., the use of color in the figures (other than black and white) is not necessary to understanding the inventive concept.

We propose a new approach for selecting an object of interest which (among other possible applications) will then be tracked along a video sequence being displayed on a device. In particular, and in accordance with the inventive concept, the idea is to combine a simple selection such as a single point, or trace, on an object of interest along with joint motion and color processing about the single point, or trace, in order to determine a bounding box containing the object of interest for display on the device.

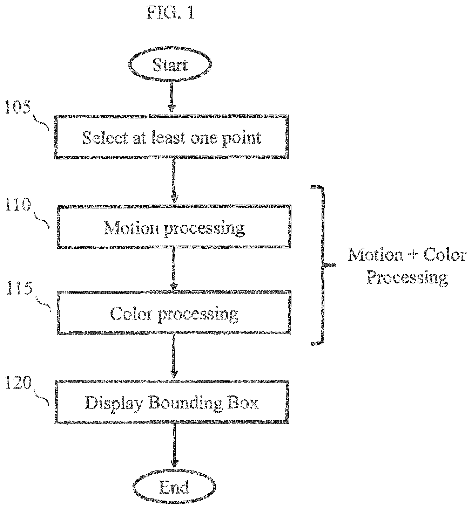

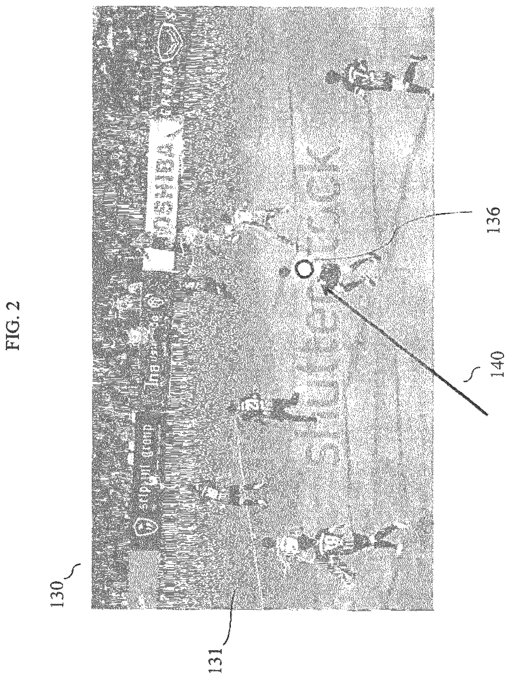

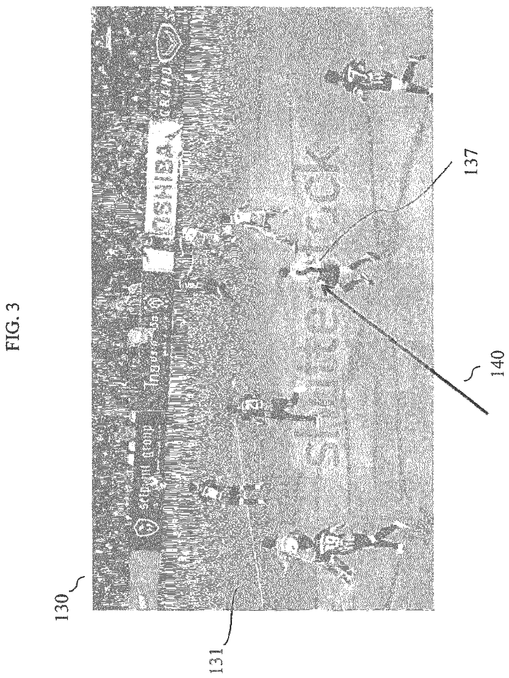

FIG. 1 shows an illustrative flow chart for providing a bounding box for display on a device in accordance with the principles of the invention. In step 105, at least one point on an object of interest is selected, e.g., by a user of the device. This determines a list of at least one point that is now assumed to be associated with the object of interest. This selection is illustrated in FIGs. 2 and 3. A device, e.g., a mobile phone, displays a frame 131 of a video sequence on a display 130 of the mobile phone. For the purposes of this example it is assumed that display 130 is a touch screen display. However, the invention is not so limited and other mechanisms for selecting at least one point on an object of interest can also be used, e.g., a mouse. As shown in FIG. 2, frame 131 shows a picture of a soccer game. The user, using their finger or a stylus, touches the picture of the person (the object of interest) pointed to by arrow 140 where the touch selects at least one point in the picture of frame 131 as represented by white dot 136. Alternatively, the user can trace a sequence of points as shown in FIG. 3 for identifying the object of interest. Again, the user, using their finger or a stylus, touches the picture of the person (the object of interest) pointed to by arrow 140 and traces a sequence of points in the picture of frame 131 as represented by white trace 137.

In accordance with the principles of the invention, motion and color processing are then applied to the selected point(s), as represented by steps 110 and 115, of Fig. 1, to determine a bounding box containing the object of interest for display in step 120.

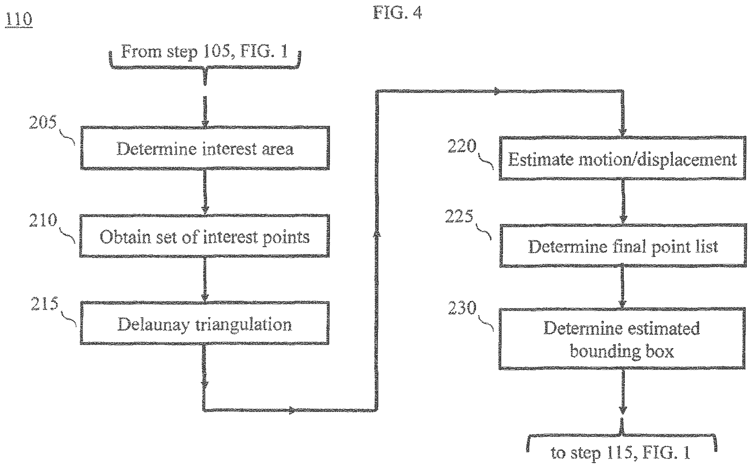

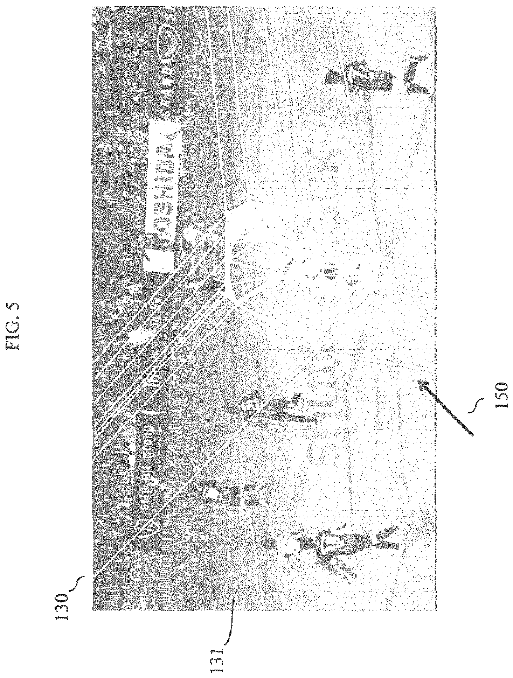

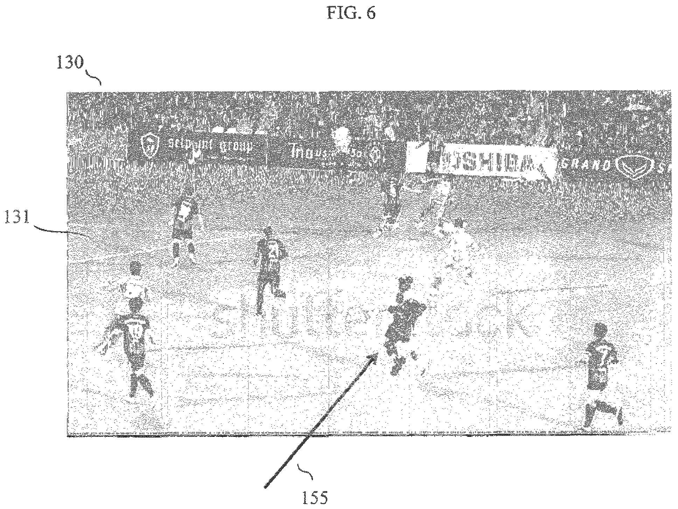

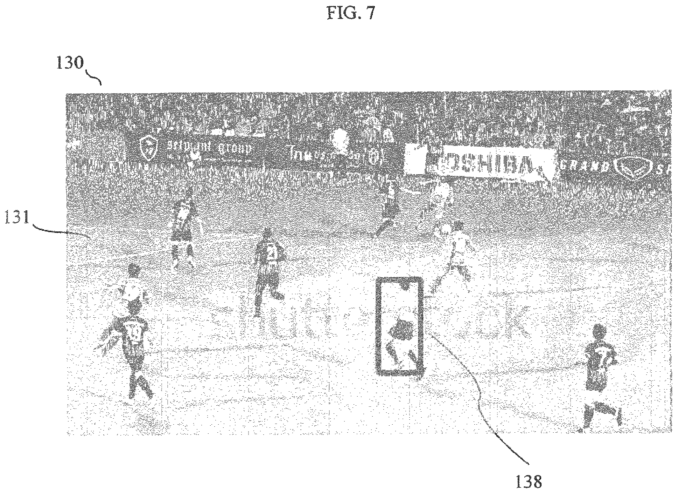

Turning now to FIG. 4, motion processing step 110 will be explained in more detail. In particular, the list of selected points (represented as two dimensional (2D) positions) are provided to step 205. As described above, this list of selected points comprises at least one point in the object of interest. In step 205, an interest area is first determined around the selected points. This interest area can be fixed or proportional to the image size. On this area, a set of interest points is obtained in step 210 by an interest point detector. Interest point detectors are known in the art, e.g., Scale-Invariant Feature Transform (SIFT), Speeded-Up Robust Features (SURF), Good Features To Track (e.g., see Carlo Tomasi and Takeo Kanade; "Detection and Tracking of Point Features"; Carnegie Mellon University Technical Report CMU-CS-91-132, April 1991; and Jianbo Shi and Carlo Tomasi; "Good Features to Track"; IEEE Conference on Computer Vision and Pattern Recognition, pages 593-600, 1994) or by random sampling. In step 215, a Delaunay triangulation is applied on the point lattice in order to determine neighboring points. This is shown in FIG. 5, where arrow 150 illustrates Delaunay triangulation (the white lines) among the interest points detected around the input position (list of selected points). Returning to FIG. 4, in step 220, a motion/displacement is then estimated for each interest point in the following image (frame) of the video sequence (e.g., see Bruce D. Lucas and Takeo Kanade; "An Iterative Image Registration Technique with an Application to Stereo Vision"; International Joint Conference on Artificial Intelligence, pages 674-679, 1981; and Carlo Tomasi and Takeo Kanade; "Detection and Tracking of Point Features"; Carnegie Mellon University Technical Report CMU-CS-91-132, April 1991). In step 225, a final point list is determined. In particular, in step 225, the interest point(s) closest to each input position of the trace (there might be no interest point where the user touched the screen) is considered as a current point and added to a final point list. Its neighbors, according to the triangulation, of step 215, are also added to the final point list if a motion related distance, from step 220, (e.g., norm of the difference between motion vectors) to such a current point is lower than a threshold and they are also close enough with respect to a spatial distance threshold. For each of those new added points the process is repeated by considering their neighbors in turn. The whole process works as a flood filling algorithm (or region growing algorithm) but on a sparse set of locations. Other than the inventive concept, region growing algorithms among motion values is known in the art (e.g., see I. Grinias G. Tziritas; "A semiautomatic seeded region growing algorithm for video object localization and tracking"; Image Communication. Volume 16, Issue 10, August 2001). A final point list is shown in FIG. 6, where arrow 155 illustrates the final list of interest points (black dots) considered part of the object of interest according to motion similarity. Returning to FIG. 4, the final point list determines an estimated bounding box in step 230. The estimated bounding box is a box that is big enough to contain all the points in the final point list. This is illustrated in FIG. 7 by estimated bounding box 138. The latter is determined using only motion information. Illustratively, the main component of the motion processing is the use of motion flood-filling on a Delaunay triangulation. The resulting estimated bounding box is provided to color processing step 115 of FIG. 1.

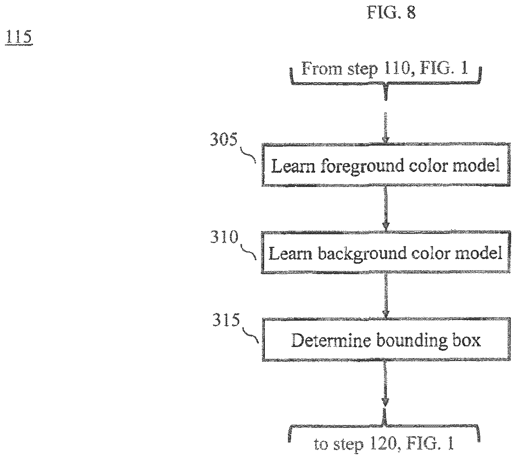

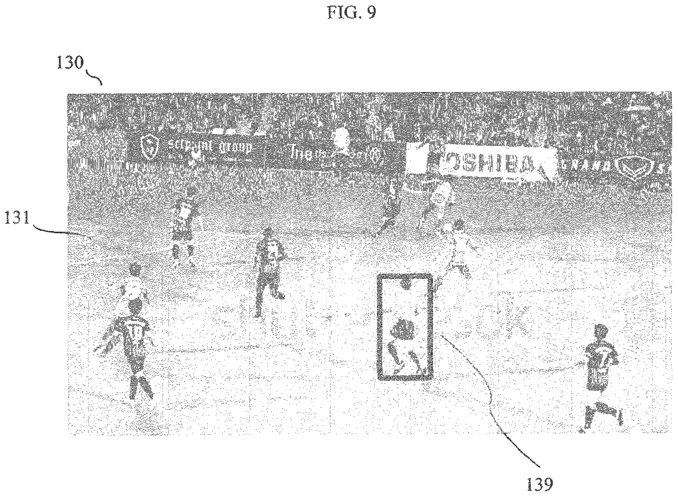

In color processing step 115, the list of points that result from motion processing step 110 (i.e., the estimated bounding box based on motion similarity) are introduced into a color-based bounding box estimation process for further refinement. Turning now to FIG. 8, color processing step 115 will be explained in more detail. In step 305, the estimated bounding box is processed such that a color model (foreground color model) is learned, e.g., by K-means clustering of pixel color vectors, according to the color vector Euclidean distance. The number of clusters is normally fixed to an initial value of 10. Then, the resulting clusters are analyzed in order to discard small clusters. The surviving color clusters are considered as belonging to the foreground. In a different variation, other clustering techniques can be used that automatically determines the best number of clusters. The color model is then represented by the set of cluster centers. Each pixel is assigned the color of the closest learned cluster in the color space. In step 310, a color model for the background is also estimated (background color model) by taking an external window (i.e., a ring around the estimated bounding box). The color vectors in the external window are clustered following the same procedure than for the foreground model. Once the foreground and background model are obtained, a post-processing on the models is applied. For Each foreground model cluster center, the minimum distance between itself and the background model clusters is computed. If this distance is lower than a threshold, we consider that the cluster is not discriminative enough and it is removed from the foreground model. Then in step 315, the bounding box is determined by a process of window growing. Starting from the estimated bounding box, the size of the window is iteratively enlarged as long as the newly added points of the region are more likely to belong to the foreground model than to the background model. More in detail, for each side of the bounding box (top, left, right, bottom) a new line (row or column) of pixels is added. For each new pixel its distance to the foreground and background models are computed as the minimum distance among the distances to each model cluster. A score is computed for each pixel that in a realization of the invention is the difference of the distance to the background minus the distance to the foreground, such that a high score implies that the pixel is far from the background model and close to the foreground model. The average of pixels scores for the new added line is calculated and if it is bigger than a threshold, the line is kept as part of the bounding box. The threshold is naturally set at 0, as the score can be negative (meaning "closer" to the background) or positive ("closer" to the foreground), and 0 means equal score. Anyways, it is a parameter that might be modified. In this way, taking each side in turn the window is enlarged until no new line is added. Finally, and as noted earlier, the bounding box is displayed containing the object of interest as illustrated in FIG. 9 by bounding box 139.

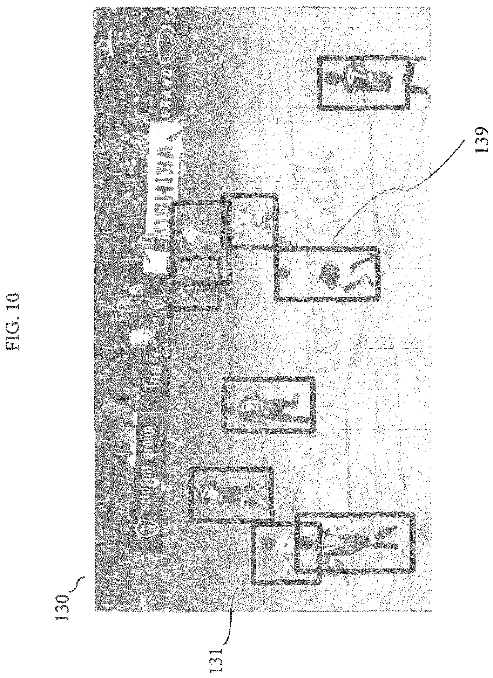

It should also be noted that assisted selection based on joint motion and color processing in accordance with the principles of the invention can be performed on multiple objects of interest as illustrated in FIG. 10, where the user initially selects at least a single point on each player of interest.

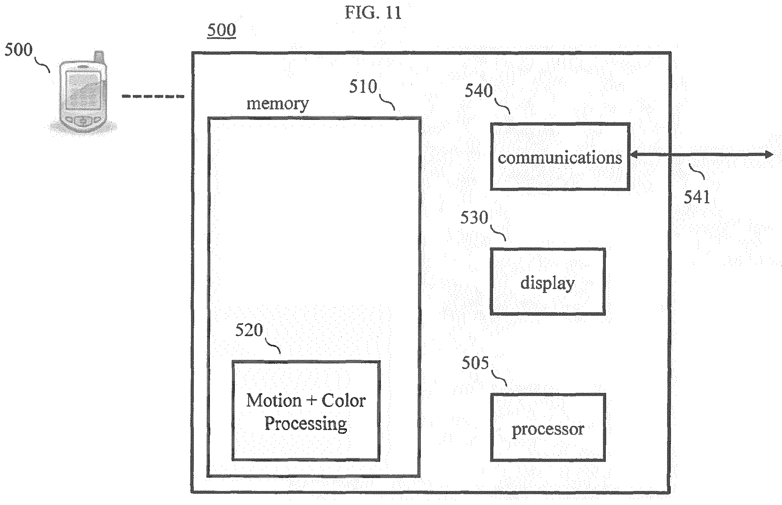

Turning briefly to FIG. 11, an illustrative high level block diagram of a device 500, e.g., a smart phone, for providing a bounding box in accordance with the principles of the invention, as illustrated by the flow charts of FIGs. 1, 4, and 8, is shown. Only those portions relevant to the inventive concept are shown. As such, device 500 can perform other functions. Device 500 is a processor based system as represented by processor 505. The latter represents one, or more, stored-program controlled processors as known in the art. In other words, processor 505 executes programs stored in memory 510. The latter represents volatile and/or non-volatile memory, e.g., hard disk, CD-ROM, DVD, random access memory (RAM), etc.) for storing program instructions and data, e.g., for performing the illustrative flow charts shown in FIGs. 1, 4 and 8, for providing a bounding box containing an object of interest. Device 500 also has communications block 130, which supports communications of data over a data connection 541 as known in the art. Data communications can be wired, or wireless, utilizing 802.11, 3G LTE, 4G LTE, etc. Finally, device 500 includes a display 530 for providing information to a user, e.g., displaying a video sequence showing the bounding box containing the object of interest. It is assumed that display 530 is a touch screen and, as such, enables selection by the user of an object of interest as illustrated in FIGs. 2 and 3. However, it should be noted that the inventive concept is not so limited and other input devices can be used, e.g., a keyboard/mouse input device.

As described above, we solve the problem of how to locate the bounding box on an object of interest on a display. Once a single point, or a trace, is selected on an object of interest, the system, or device, automatically determines the bounding box based on motion and color propagation. In other words, a single touch or trace determines a few points that belong to the object of interest, and the bounding box is then determined by flood-filling following motion and color features. In accordance with the principles of the invention, the region filling is determined by color propagation, and uses motion similarity as another feature for determining the pixels that are likely to belong to the same object as the selected points. That is why it is important to use motion information in order to determine which are the object's parts not only from the appearance point of view, but also on how the object coherently moves.

In view of the above, the foregoing merely illustrates the principles of the invention and it will thus be appreciated that those skilled in the art will be able to devise numerous alternative arrangements which, although not explicitly described herein and are within the scope of the claims. It is therefore to be understood that numerous modifications may be made to the illustrative embodiments and that other arrangements may be devised without departing from the scope of the claims.

## Claims

1. A method for determining a bounding box for display on a device, the bounding box containing an object in a video sequence, the method comprising:
- selecting at least one point that belongs to the object (105);
- motion processing an area of points around the selected at least one point to determine an estimated bounding box (110); and
- color processing the points in the estimated bounding box to determine the bounding box (115);
the color processing further comprising:
- adding a new line of pixels;
- computing a score for each new pixel, wherein the score is equal to a difference between a distance to a background model and a distance to a foreground model;
- averaging the scores for the new line of pixels; wherein if the average score for the new line of pixels is greater than a threshold, the new line of pixels is added to the estimated bounding box;
wherein the bounding box is formed when no new line of pixels is added.

2. The method of claim 1, wherein the selecting is performed by a user.

3. The method of claim 1, wherein the motion processing uses motion flood-filling on a Delaunay triangulation.

4. An apparatus comprising a memory associated with at least one processor (505) configured to :
- display a video sequence and allow a selection of at least one point on an object of interest in the displayed video sequence (530);
- store in the memory a motion processing program and a color processing program (510); and
- process the selected at least one point with the stored motion processing program and the stored color processing program for determining a bounding box;
wherein the stored motion processing program comprises instructions for motion flood-filling on a Delaunay triangulation to determine an estimated bounding box; the stored color processing program further comprising instructions:
- for adding a new line of pixels to the estimated bounding box;
- for computing a score for each new pixel, wherein the score is equal to a difference between a distance to a background model and a distance to a foreground model; and
- for averaging scores for the new line of pixels and adding the new line to the estimated bounding box if the average score for the new line of pixels is greater than a threshold;
wherein the bounding box is formed when no new line of pixels is added.

5. The apparatus of claim 4, further comprising a display for displaying the video sequence and an input device for allowing said selection of said at least one point.

6. The apparatus of claim 5, wherein the input device is as least one of a mouse or keyboard.

## Patentansprüche

1. Verfahren zum Bestimmen einer Bounding-Box zur Anzeige auf einer Vorrichtung, wobei die Bounding-Box ein Objekt in einer Videosequenz enthält, wobei das Verfahren umfasst:
- Auswählen mindestens eines Punkts, der zu dem Objekt gehört (105);
- Bewegungsverarbeitung eines Bereichs von Punkten um den ausgewählten mindestens einen Punkt, um eine geschätzte Bounding-Box zu bestimmen (110); und
- Farbverarbeitung der Punkte in der geschätzten Bounding-Box, um die Bounding-Box zu bestimmen (115);
wobei die Farbverarbeitung ferner umfasst:
- Hinzufügen einer neuen Linie von Pixeln;
- Berechnen einer Bewertung für jedes neue Pixel, wobei die Bewertung gleich einer Differenz zwischen einer Entfernung zu einem Hintergrundmodell und einer Entfernung zu einem Vordergrundmodell ist;
- Mitteln der Bewertungen für die neue Linie von Pixeln; wobei die neue Linie von Pixeln zu der geschätzten Bounding-Box hinzugefügt wird, falls die durchschnittliche Bewertung für die neue Linie von Pixeln höher als ein Schwellenwert ist;
wobei die Bounding-Box gebildet wird, wenn keine neue Linie von Pixeln hinzugefügt wird.

2. Verfahren nach Anspruch 1, wobei das Auswählen durch einen Nutzer ausgeführt wird.

3. Verfahren nach Anspruch 1, wobei die Bewegungsverarbeitung die Bewegungsflutfüllung in einer Delaunay-Triangulation verwendet.

4. Vorrichtung, die einen Speicher umfasst, dem mindestens ein Prozessor (505) zugeordnet ist, der konfiguriert ist zum:
- Anzeigen einer Videosequenz und Ermöglichen einer Auswahl mindestens eines Punkts an einem interessierenden Objekt in der angezeigten Videosequenz (530);
- Speichern eines Bewegungsverarbeitungsprogramms und eines Farbverarbeitungsprogramms in dem Speicher (510); und
- Verarbeiten des ausgewählten mindestens einen Punkts mit dem gespeicherten Bewegungsverarbeitungsprogramm und mit dem gespeicherten Farbverarbeitungsprogramm, um eine Bounding-Box zu bestimmen;
wobei das gespeicherte Bewegungsverarbeitungsprogramm Anweisungen für die Bewegungsflutfüllung in einer Delaunay-Triangulation umfasst, um eine geschätzte Bounding-Box zu bestimmen; wobei das gespeicherte Farbverarbeitungsprogramm ferner Anweisungen umfasst:
- zum Hinzufügen einer neuen Linie von Pixeln zu der geschätzten Bounding-Box;
- zum Berechnen einer Bewertung für jedes neue Pixel, wobei die Bewertung gleich einer Differenz zwischen einer Entfernung zu einem Hintergrundmodell und einer Entfernung zu einem Vordergrundmodell ist; und
- zum Mitteln der Bewertungen für die neue Linie von Pixeln und zum Hinzufügen der neuen Linie von Pixeln zu der geschätzten Bounding-Box, falls die durchschnittliche Bewertung für die neue Linie von Pixeln höher als ein Schwellenwert ist;
wobei die Bounding-Box gebildet wird, wenn keine neue Linie von Pixeln hinzugefügt wird.

5. Vorrichtung nach Anspruch 4, die ferner eine Anzeige zum Anzeigen der Videosequenz und eine Eingabevorrichtung, um die Auswahl des mindestens einen Punkts zu ermöglichen, umfasst.

6. Vorrichtung nach Anspruch 5, wobei die Eingabevorrichtung eine Maus und/oder eine Tastatur ist.

## Revendications

1. Procédé pour déterminer un cadre de délimitation à afficher sur un dispositif, le cadre de délimitation contenant un objet dans une séquence vidéo, le procédé comprenant :
- la sélection d'au moins un point qui appartient à l'objet (105) ;
- le traitement du mouvement d'une zone de points autour du au moins un point sélectionné pour déterminer un cadre de délimitation estimé (110) ; et
- le traitement de la couleur des points dans le cadre de délimitation estimé pour déterminer le
cadre de délimitation (115) ;
le traitement de la couleur comprenant en outre :
- l'ajout d'une nouvelle ligne de pixels ;
- le calcul d'un résultat pour chaque nouveau pixel, où le résultat est égal à une différence entre une distance par rapport à un modèle en arrière-plan et une distance par rapport à un modèle en avant-plan ;
- le calcul de la moyenne des résultats pour la nouvelle ligne de pixels, où si le résultat moyen de la nouvelle ligne de pixels est supérieur à un seuil, la nouvelle ligne de pixels est ajoutée au cadre de délimitation estimé ;
dans lequel le cadre de délimitation est formé lorsqu'aucune nouvelle ligne de pixels n'est ajoutée.

2. Procédé selon la revendication 1, dans lequel la sélection est effectuée par un utilisateur.

3. Procédé selon la revendication 1, dans lequel le traitement du mouvement utilise le remplissage par diffusion sur une triangulation de Delaunay.

4. Appareil comprenant une mémoire associée à au moins un processeur (505) configuré pour :
- afficher une séquence vidéo et permettre une sélection d'au moins un point sur un objet d'intérêt dans la séquence vidéo affichée (530) ;
- stocker en mémoire un programme de traitement de mouvement et un programme de traitement de couleur (510) ; et
- traiter le au moins un point sélectionné avec le programme de traitement de mouvement stocké et le programme de traitement de couleur stocké pour déterminer un cadre de délimitation ;
dans lequel le programme de traitement de mouvement stocké comprend des instructions pour le remplissage par diffusion sur une triangulation de Delaunay pour déterminer un cadre de délimitation estimé ; le programme de traitement de couleur stocké comprenant en outre des instructions :
- pour ajouter une nouvelle ligne de pixels au cadre de délimitation estimé ;
- pour calculer un résultat pour chaque nouveau pixel, où le résultat est égal à une différence entre une distance par rapport à un modèle en arrière-plan et une distance par rapport à un modèle en avant-plan ; et
- pour calculer la moyenne des résultats pour la nouvelle ligne de pixels et ajouter la nouvelle ligne au cadre de délimitation estimé si le résultat moyen pour la nouvelle ligne de pixels est supérieur à un seuil ;
dans lequel le cadre de délimitation est formé lorsqu'aucune nouvelle ligne de pixels n'est ajoutée.

5. Appareil selon la revendication 4, comprenant en outre un écran pour afficher la
séquence vidéo et un dispositif d'entrée pour permettre ladite sélection dudit au moins un point.

6. Appareil selon la revendication 5, dans lequel le dispositif d'entrée est au moins une souris ou un clavier.
